# EUROPEAN PATENT SPECIFICATION

(11) **EP 4 361 554 B1**
(45) Date of publication and mention of the grant of the patent: **06.05.2026**
(21) Application number: 22383024.1
(22) Date of filing: 24.10.2022
(51) Int. Cl.: G01B 11/02

(54) **AUTOMOTIVE WIRING INSPECTION METHOD**
INSPEKTIONSVERFAHREN FÜR AUTOMOBILVERKABELUNGEN
PROCÉDÉ D'INSPECTION DE CÂBLAGE D'AUTOMOBILE

(43) Date of publication of application: 01.05.2024
(73) Proprietor: EMDEP 2, S.L., 43813 Alió (Tarragona) (ES)
(72) Inventor: MARTÍNEZ ZAMBRANA, Juan Antonio, 43813 Alió, Tarragona (ES)
(74) Representative: Pons IP

(56) References cited:
- KR-A- 20180 046 288
- KR-B1- 102 378 186
- KAMBLE SUPRIYA S ET AL: "Automatic Optical Inspection System for wiring harness using Computer Vision", 2021 IEEE INTERNATIONAL CONFERENCE ON ELECTRONICS, COMPUTING AND COMMUNICATION TECHNOLOGIES (CONECCT), IEEE, 9 July 2021 (2021-07-09), pages 1 - 5, XP034039990, [retrieved on 20211119], DOI: 10.1109/CONECCT52877.2021.9622654
- LEE WEI-CHEN ET AL: "Application of Machine Vision to Inspect a Wiring Harness", 2019 IEEE INTERNATIONAL CONFERENCE ON INDUSTRIAL CYBER PHYSICAL SYSTEMS (ICPS), IEEE, 6 May 2019 (2019-05-06), pages 457 - 460, XP033585539, [retrieved on 20190729], DOI: 10.1109/ICPHYS.2019.8780292
- YUMBLA FRANCISCO ET AL: "Preliminary Connector Recognition System Based on Image Processing for Wire Harness Assembly Tasks", 2020 20TH INTERNATIONAL CONFERENCE ON CONTROL, AUTOMATION AND SYSTEMS (ICCAS), INSTITUTE OF CONTROL, ROBOTICS, AND SYSTEMS - ICROS, 13 October 2020 (2020-10-13), pages 1146 - 1150, XP033867233, [retrieved on 20201123], DOI: 10.23919/ICCAS50221.2020.9268291

## Description

### OBJECT OF THE INVENTION

The object of the present invention relates to an automobile wiring inspection method, particularly applicable in the technological field of automatic measurements of dimensions, specifically in the sector of length measurement and component detection by shape and color, within automobile wiring.

In the method, measurement nodes are defined in images taken by means of cameras positioned on the cables and a length relationship is established between measurements in the International System and pixels, in order to be able to obtain the complete or partial length of a cable or a cable assembly. In addition, the different components connected to the cables can be identified based on recognition of their shape and color.

### BACKGROUND OF THE INVENTION

The cable harnesses or cable assembly of an automobile refer to a component of the electrical circuit formed by grouped copper cables and wires, with subsequent plastic compression of an insulator or mechanical element.

Today, with the increase in the supply of electric vehicles in which the electrical wiring is becoming very important, it is necessary to check the cables that will be incorporated in the vehicle and their dimensional characteristics, which are very strict.

Cable harnesses in automobiles have become a frequent cause of failures in electric vehicles, one of these types of failures being factory defects in terms of lengths or dimensions, which may cause problems relating to information loss between elements or simply to them not corresponding to the expected dimensions, and therefore cannot be installed, when being introduced into the car.

To ensure the safety and reliability of the cable harness and quality approval, the cable harness must be inspected and examined strictly and quickly in order to find and eliminate unqualified products with problems such as poor contact, poor insulation, and assembly errors in time.

Electrical faults are performed on electrical test benches but the checking of dimensions and certain wiring elements is, however, currently performed by means of a manual visual inspection process, causing several problems, such as increased production time, loss of efficiency because it is performed by an operator who may be subjected to stress or fatigue, and therefore leading to inspection errors.

Kamble Supriya S. and Kulkami Ashwini A. "Automatic Optical Inspection System for wiring harness using Computer Vision", 2021 IEEE International Conference on Electronics, Computing and Communication Technologies (CONECCT), IEEE, 9 July 2021 (pp. 1-5) discloses a method for determining the length of a cable disposed on a worktable based on an image captured by a camera.

### DESCRIPTION OF THE INVENTION

The present invention as defined in the independent claim 1 seeks to solve the problems arising from wiring inspection methods known in the state of the art by means of automatically measuring the length of wiring in automobiles.

In a first step of the method, a single cable or an assembly of cables attached to one another are placed on a worktable, stretching each cable as much as possible in order to be able to capture images as accurately as possible, i.e., with the curvatures typical of the flexible geometry of the cable being absent as much as possible. The cables may incorporate elements such as clips and connectors.

The cables can be arranged directly on the table without fastening or can be fixed to the table by means of fastening harnesses such that they remain taut. In addition, in either case, references can be placed on the table to guide an operator when placing the cables. This provides great flexibility because the fact that some branches are not fastened to a tension device but rather rest directly on the table makes the placement thereof much faster. An artificial intelligence algorithm will then look for the locations where the connectors are not fastened to the elements.

The worktable can also be illuminated to prevent shades and to ensure that the images are of the highest quality possible.

Image acquisition is performed with one or more cameras, such as 20-megapixel Ethernet cameras, for example, which take images from top views (on a face opposite the worktable) and/or side views (with respect to the worktable) of the wiring assembly. The top or side images are taken depending on the geometry of the cables, such that images which provide the clearest image of the cables are taken.

Once the images have been taken, the processing thereof, which consists of transforming the color image into a binary image, is carried out, in which the cables are reduced to lines that represent their geometry and arrangement in a simplified manner. A preferred embodiment of the different steps to be followed for processing the acquired image is described below.

First, the images are converted to grayscale. A blurring step, preferably Gaussian blur, is then performed, eliminating elements that are not essential in the acquired image, i.e., maintaining the focus only on the cables.

After blurring has been performed, an image binarization operation is performed, obtaining an image with black and white pixels. The "empty" pixels inside the cables of the image can then optionally be filled in.

Finally, a thinning step is performed, such that the shapes of the cables are reduced to a geometry with a set of curves centered on the original shape of the cable. In this way, the topological properties of the original shape of the cable, as well as the geometrical properties, are preserved.

After the processing step, the method comprises a step of creating nodes, segments, and branches. The nodes are imaginary reference points arranged on the cables. The segments are the cable lines connecting two nodes. The branches are cable assemblies. These elements are placed on the captured image of the wiring to be inspected.

The nodes can be defined in different ways. An operator places the node in the place he/she deems appropriate manually, using absolute coordinates. Relatively, with respect to a reference point. Automatically, in the center of each cable.

Finally, based on the processed image with the nodes and segments placed, the method comprises a step of calculating the distances between the nodes. The distances can be determined in pixels and then converted to length measurements in units of the International System.

Additionally, the method comprises a step of training an artificial intelligence model for calculating node-based distances from the processed images. The training of the artificial intelligence model is performed by means of a known geometry, for example, the head of a screw or the distance of a plate. Based on a conversion factor, the model must transform the distance measured in pixels to a distance in units of the International System. For example, a head screw measuring 7.8 mm in diameter would be framed by a 45-pixel box.

The artificial intelligence model allows the configuration of as many calibration points as required. With all these points, a matrix that encompasses the entire image will be generated and a conversion factor to be used in each area of the image is thus determined to be able to convert pixels to millimeters, for example.

Moreover, the method may comprise a series of additional steps of identifying shapes, colors, and common elements in the wiring, such as clips and connectors, the latter without the need for prior training.

Therefore, the method may comprise an additional step of identifying shapes based on template matching. Template matching is a technique for finding areas of an image that are similar to a patch (template). A patch is a small image with specific characteristics. The goal of template matching is to find the patch in an image.

Therefore, in this step of the method, template matching is applied on the acquired image or images, the templates having been previously defined under human supervision. In this way, different elements that may be of interest can be identified in the image, such as the mentioned clips or connectors, for example.

Moreover, the method may comprise a step of identifying the color of the wiring, in order to be able to determine if there is any defect which can be detected at a glance. The step is based on a mixed system based on color and the quantification of said color, and comprises the following sub-steps:
- Locating each of the pixels of the image in an HSV color space. The HSV (Hue, Saturation, Value) model defines a color model in terms of its components. Said color space can be created manually or by means of analyzing a 10x10 pixel inspection region.
- Determining the color of each of the pixels based on its location in the HSV model, taking into account a predefined minimum and maximum range of acceptance for approval of the color found.
- Based on the color of each of the pixels of the cables, determining defects characterized by having a color different from that of the cable.

The method may also comprise a step of identifying protuberances in the cable, which allows the detection of changes in the uniformity of the wiring by means of using cable routing behavior and histogram analysis. This step comprises the following sub-steps:
- determining the orientation of the pixel and of its neighboring pixels in each pixel of the curves centered on the original shape of the cable (framework) created in the thinning step,
- determining when an area of potential protuberance begins and how far it may extend based on the comparison of the different orientations of the pixels,
- analyzing the protuberance, once found, to determine its orientation and position with respect to the closest node.

Finally, the method may comprise a step of detecting the connectors, wherein an adaptive analysis of the image is performed, comprising the following sub-steps:
- segmenting the image to determine an area in which the connector is located,
- inspecting the area to determine the limits of the connector,
- performing a histogram analysis to determine an area of attachment of the cable with the connector, and
- positioning a node in the area of attachment of the cable with the connector, in order to be able to subsequently determine the length of the cable.

### DESCRIPTION OF THE DRAWINGS

As a complement to the description provided herein, and for the purpose of helping to make the features of the invention more readily understandable, in accordance with a preferred practical exemplary embodiment thereof, said description is accompanied by a set of drawings constituting an integral part of the same, which by way of illustration and not limitation, the following has been represented:
Figure 1.- Shows a schematic view of the wiring imaging station.
Figure 2.- Shows a phase diagram of the automobile wiring inspection method.
Figure 3.- Shows an example of the shape detection step.
Figure 4.- Shows an example of the color detection step.

### PREFERRED EMBODIMENT OF THE INVENTION

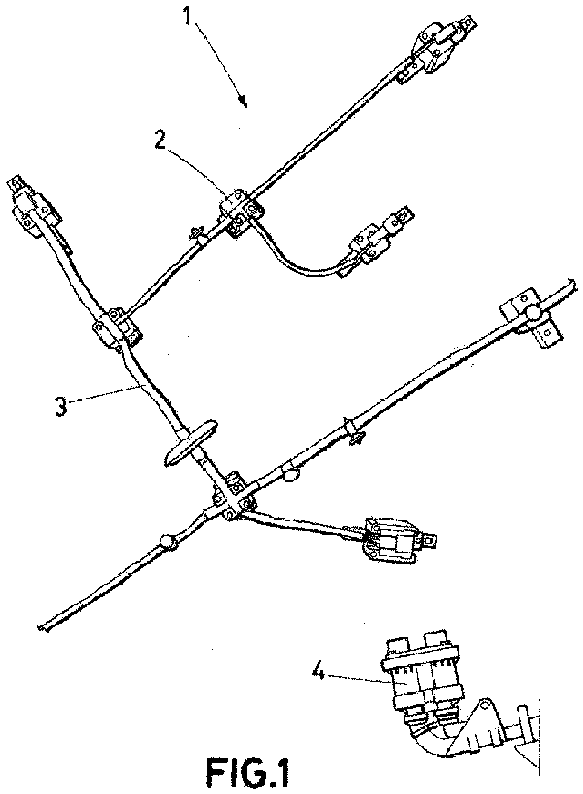

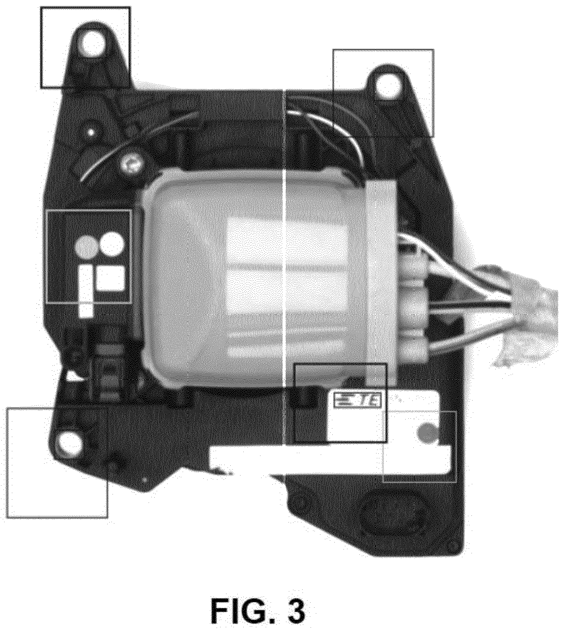

A preferred embodiment of the automobile wiring inspection method is described below with the aid of Figures 1 to 4.

Figure 1 shows a schematic view of an automobile wiring imaging station. The station comprises a worktable (1) on which automobile cables (3) are positioned, fastened by means of fastening harnesses (2) which keep the cables (3) fixed to the worktable (1) in a tensioned manner. Alternatively, the cables (3) could be arranged directly on the worktable (1) without any fastening. The cables (3) can also be connected to other elements, such as clips or connectors.

The station also comprises a set of cameras (4) taking images of the assembly of cables (3) laterally and/or from the top.

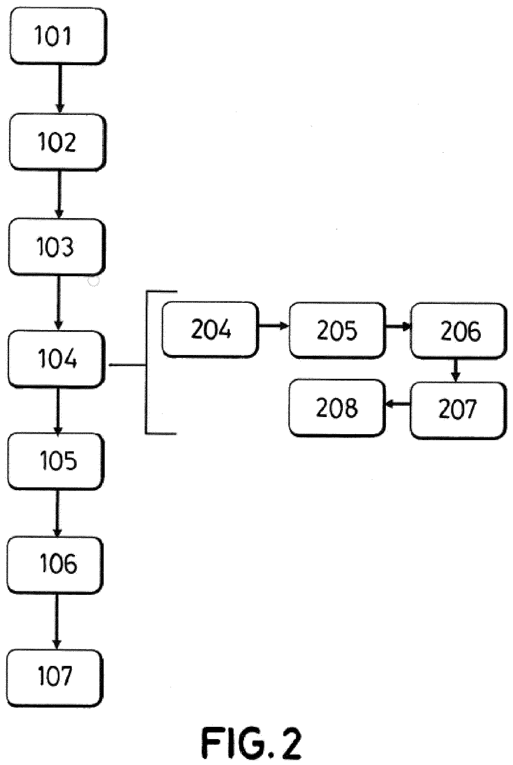

Moreover, Figure 2 shows a flow diagram of the method of the invention, which allows obtaining measurements of the dimensions of the cables (3) arranged on the worktable (1).

The method comprises a first step of positioning the cables (3) on the worktable (1), such that they are distributed and optionally fixed by means of the fastening harnesses (2).

Images (101) are then obtained from the sides and/or top of the cables (3) by means of the set of cameras (4). The images (102) are then sent to a computer in which image processing software (103) is executed.

The images are processed (104) and reference points are established (105) by measurement nodes being created (106) on the images manually by a user or automatically.

Based on the defined measurement nodes, the distance between nodes in pixels is converted (107) to units of the International System by means of a conversion factor. Finally, the distance in units of the International System between established nodes is obtained.

The step of processing the images (104) of the cables (3) may in turn include the sub-steps of: converting the color images to grayscale (204), blurring the images (205) obtaining a sharp image of only the cables (3), binarizing the images (206) obtaining white and black pixels, filling in the pixels (207) of the binarized images obtaining pixel uniformity, and creating a central reference framework (208) in which measurement nodes are created (106).

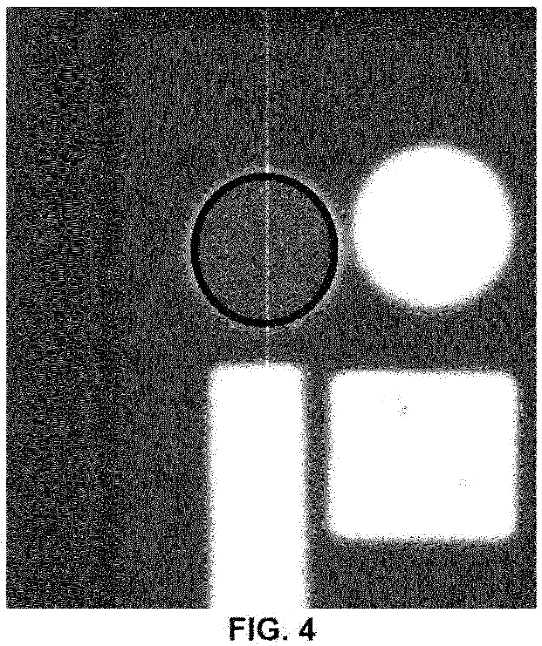

Additionally, the process may comprise the steps of:
- identifying shapes by means of the template matching technique, which is applied on the acquired image or images to identify different elements that may be of interest in the image, such as the mentioned clips or connectors, for example. An example of this step is shown in Figure 4, in which holes have been identified in the detectors.
- identifying the color of the cable (3), in order to be able to determine if there is any defect which can be detected at a glance, comprising the sub-steps of:
   ∘ locating each of the pixels of the image in an HSV color space,
   ∘ determining the color of each of the pixels based on its location in the HSV model, taking into account a predefined minimum and maximum range of acceptance for approval of the color found,
   ∘ based on the color of each of the pixels of the cables (3), determining defects characterized by having a color different from that of the cable (3).
   Figure 4 shows an example of the color identification step, in which a color identified to be different from the usual color is represented by a circle.
- identifying protuberances in the cable (3) which comprises the following sub-steps:
   ∘ determining the orientation of the pixel and of its neighboring pixels in each pixel of the curves centered on the original shape of the cable (framework) created in the thinning step,
   ∘ determining when an area of potential protuberance begins and how far it may extend based on the comparison of the different orientations of the pixels,
   ∘ analyzing the protuberance, once found, to determine its orientation and position with respect to the closest node.
- detecting the connectors which comprises the following sub-steps:
   ∘ segmenting the image to determine an area in which the connector is located,
   ∘ inspecting the area to determine the limits of the connector,
   ∘ performing a histogram analysis to determine the area of attachment of the cable (3) with the connector, and
   ∘ positioning a node in the area of attachment of the cable (3) with the connector, in order to be able to subsequently determine the length of the cable (3).

## Claims

1. An automobile wiring inspection method which uses of a worktable (1) on which one or more automobile cables (3) are arranged such that the cables (3) are stretched, the method comprising the steps of:
- acquiring (101), with a camera (4), an image of the cables (3) arranged on the worktable (1),
- processing (104) the image, transforming it into a binary image, in which the cables (3) are lines representing their geometry and arrangement,
- creating (106) reference nodes on the cables (3) of the processed image,
- calculating (107) a distance in pixels between the reference nodes,
- converting the distance in pixels between the reference nodes to a distance in units of measurement using an artificial intelligence model previously trained by means of a known image geometry for configuring many calibration points, generating with all these points a set of conversion factors to be applied to different areas of the image, and transforming the distance measured in pixels to a distance in length units using the conversion factors; and
- repeating the calculation (107) and conversion steps until a set of distances of interest between the reference nodes is obtained.

2. The method according to claim 1, comprising a previous step of fixing the cables (3) to the worktable (1) by means of fastening harnesses (2), such that the cables (3) are stretched and tensioned.

3. The method according to claim 1, wherein the step of processing (104) the image comprises the sub-steps of:
- converting (204) the image to grayscale,
- blurring (205) the image, maintaining the focus only on the cables (3),
- binarizing (206) the image, obtaining an image with black and white pixels, and
- thinning (208) the cables (3) in the image, such that they are reduced to a geometry with a set of centered curves.

4. The method according to claim 3, wherein a Gaussian blur is performed in the blurring step (205).

5. The method according to claim 3, comprising an additional step after the binarizing step (206) of filling in (207) the pixels left empty inside the cables (3) of the image.

6. The method according to claim 1, wherein acquiring (101) the images is performed from the top, at a point opposite the worktable (1).

7. The method according to claim 1, wherein acquiring (101) the images is performed laterally with respect to the worktable (1) and the cables (3).

8. The method according to claim 1, which may comprise an additional step prior to the step of obtaining the images (102) of illuminating the worktable (1) to improve the quality of the images.

9. The method according to claim 1, comprising an additional step of identifying shapes, comprising a sub-step of applying template matching on the acquired image of the cables (3) in order to identify an element of interest.

10. The method according to claim 1, comprising an additional step of identifying the color of the cable (3), comprising the sub-steps of:
- locating each of the pixels of the image in an HSV color space,
- determining the color of each of the pixels from its location in the HSV model, taking into account a predefined minimum and maximum acceptance range,
- determining the color of the cable (3),
- from the color of each of the pixels of the cables (3), determining defects having a color different from that of the cable (3).

11. The method according to claim 3, comprising an additional step of identifying protuberances in the cable (3), comprising the following sub-steps:
- determining, in each pixel of the curves centered on the original shape of the cable (3) created in the thinning step, the orientation of the pixel and of its neighboring pixels,
- determining when a protuberance starts, as well as its size based on the comparison of the orientations of the pixels,
- if a protuberance is detected, determining its orientation and position with respect to the closest node.

12. The method according to claim 1, wherein, when the cables (3) are connected to connectors, it comprises an additional step of detecting the connectors, comprising the following sub-steps:
- segmenting the image to determine an area in which the connector is located,
- inspecting the area to determine the limits of the connector,
- performing a histogram analysis to determine an area of attachment of the cable (3) with the connector, and
- positioning a node in the area of attachment of the cable (3) with the connector, in order to be able to subsequently determine the length of the cable (3).

13. A computer program configured when run on a computer used in combination with a camera for executing the steps of the method according to any of claims 1, 2, 4 to 7 and 9 to 11.

14. A storage unit configured for storing the computer program according to claim 13.

## Patentansprüche

1. Inspektionsverfahren für Automobilverkabelungen, bei dem ein Arbeitstisch (1) verwendet wird, auf dem ein oder mehrere Automobilkabel (3) derart angeordnet sind, dass die Kabel (3) gestreckt sind, wobei das Verfahren die folgenden Schritte umfasst:
- Erfassen (101) eines Bildes der auf dem Arbeitstisch (1) angeordneten Kabel (3) mit einer Kamera (4),
- Verarbeiten (104) des Bildes, wobei es in ein Binärbild umgewandelt wird, in dem die Kabel (3) Linien sind, die ihre Geometrie und Anordnung darstellen,
- Erstellen (106) von Referenzknoten auf den Kabeln (3) des verarbeiteten Bildes,
- Berechnen (107) eines Abstands in Pixeln zwischen den Referenzknoten,
- Konvertieren des Abstands in Pixeln zwischen den Referenzknoten in einen Abstand in Maßeinheiten unter Verwendung eines Modells künstlicher Intelligenz, das zuvor mittels einer bekannten Bildgeometrie trainiert wurde, um viele Kalibrierungspunkte zu konfigurieren, wobei mit all diesen Punkten ein Satz von Konversionsfaktoren generiert wird, die auf verschiedene Bereiche des Bildes anzuwenden sind, und Umwandeln des in Pixeln gemessenen Abstands in einen Abstand in Längeneinheiten unter Verwendung der Konversionsfaktoren; und
- Wiederholen der Berechnungs- (107) und Konversionsschritte, bis ein Satz von Abständen von Interesse zwischen den Referenzknoten erhalten wird.

2. Verfahren nach Anspruch 1, umfassend einen vorhergehenden Schritt des Fixierens der Kabel (3) am Arbeitstisch (1) mittels Befestigungsgurten (2), so dass die Kabel (3) gestreckt und gespannt sind.

3. Verfahren nach Anspruch 1, wobei der Schritt des Verarbeitens (104) des Bildes die folgenden Teilschritte umfasst:
- Konvertieren (204) des Bildes in Graustufen,
- Weichzeichnen (205) des Bildes, wobei der Fokus nur auf den Kabeln (3) beibehalten wird,
- Binarisieren (206) des Bildes, wobei ein Bild mit schwarzen und weißen Pixeln erhalten wird, und
- Ausdünnen (208) der Kabel (3) im Bild, so dass sie auf eine Geometrie mit einem Satz zentrierter Kurven reduziert werden.

4. Verfahren nach Anspruch 3, wobei im Weichzeichnungsschritt (205) eine Gaußsche Weichzeichnung durchgeführt wird.

5. Verfahren nach Anspruch 3, umfassend einen zusätzlichen Schritt nach dem Binarisierungsschritt (206), bei dem die innerhalb der Kabel (3) des Bildes leer gebliebenen Pixel aufgefüllt werden (207).

6. Verfahren nach Anspruch 1, wobei das Erfassen (101) der Bilder von oben, an einem Punkt gegenüber dem Arbeitstisch (1), durchgeführt wird.

7. Verfahren nach Anspruch 1, wobei das Erfassen (101) der Bilder seitlich in Bezug auf den Arbeitstisch (1) und die Kabel (3) durchgeführt wird.

8. Verfahren nach Anspruch 1, das einen zusätzlichen Schritt vor dem Schritt des Erhaltens der Bilder (102) umfassen kann, bei dem der Arbeitstisch (1) beleuchtet wird, um die Qualität der Bilder zu verbessern.

9. Verfahren nach Anspruch 1, das einen zusätzlichen Schritt des Identifizierens von Formen umfasst, der einen Teilschritt des Anwendens von Vorlagenabgleich auf das erfasste Bild der Kabel (3) umfasst, um ein Element von Interesse zu identifizieren.

10. Verfahren nach Anspruch 1, umfassend einen zusätzlichen Schritt des Identifizierens der Farbe des Kabels (3), der die folgenden Teilschritte umfasst:
- Lokalisieren jedes der Pixel des Bildes in einem HSV-Farbraum,
- Bestimmen der Farbe jedes der Pixel anhand seines Standorts im HSV-Modell unter Berücksichtigung eines vordefinierten minimalen und maximalen Akzeptanzbereichs,
- Bestimmen der Farbe des Kabels (3),
- aus der Farbe jedes der Pixel der Kabel (3), Bestimmen von Defekten mit einer anderen Farbe als der des Kabels (3).

11. Verfahren nach Anspruch 3, umfassend einen zusätzlichen Schritt des Identifizierens von Ausbuchtungen im Kabel (3), der die folgenden Teilschritte umfasst:
- Bestimmen, in jedem Pixel der Kurven, die auf die im Ausdünnungsschritt erstellte ursprüngliche Form des Kabels (3) zentriert sind, der Ausrichtung des Pixels und seiner benachbarten Pixel,
- Bestimmen, wann eine Ausbuchtung beginnt, sowie ihrer Größe basierend auf dem Vergleich der Ausrichtungen der Pixel,
- falls eine Ausbuchtung erkannt wird, Bestimmen ihrer Ausrichtung und Position in Bezug auf den nächstgelegenen Knoten.

12. Verfahren nach Anspruch 1, wobei es, wenn die Kabel (3) an Verbinder angeschlossen sind, einen zusätzlichen Schritt des Erkennens der Verbinder umfasst, der die folgenden Teilschritte umfasst:
- Segmentieren des Bildes, um einen Bereich zu bestimmen, in dem sich der Verbinder befindet,
- Untersuchen des Bereichs, um die Grenzen des Verbinders zu bestimmen,
- Durchführen einer Histogrammanalyse, um einen Bereich der Befestigung des Kabels (3) am Verbinder zu bestimmen, und
- Positionieren eines Knotens im Bereich der Befestigung des Kabels (3) am Verbinder, um anschließend die Länge des Kabels (3) bestimmen zu können.

13. Computerprogramm, das dazu konfiguriert ist, wenn es auf einem Computer ausgeführt wird, der in Verbindung mit einer Kamera verwendet wird, um die Schritte des Verfahrens nach einem der Ansprüche 1, 2, 4 bis 7 und 9 bis 11 auszuführen.

14. Speichereinheit, die dazu konfiguriert ist, das Computerprogramm nach Anspruch 13 zu speichern.

## Revendications

1. Procédé d'inspection de câblage d'automobile utilisant une table de travail (1) sur laquelle un ou plusieurs câbles automobiles (3) sont disposés de sorte que les câbles (3) soient étirés, le procédé comprenant les étapes consistant à :
- l'acquisition (101), avec une caméra (4), d'une image des câbles (3) disposés sur la table de travail (1),
- le traitement (104) de l'image, la transformant en une image binaire, dans laquelle les câbles (3) sont représentés par des lignes illustrant leur géométrie et leur disposition,
- la création (106) de nœuds de référence sur les câbles (3) de l'image traitée,
- le calcul (107) d'une distance en pixels entre les nœuds de référence,
- la conversion de la distance en pixels entre les nœuds de référence en une distance exprimée en unités de mesure à l'aide d'un modèle d'intelligence artificielle préalablement entraîné au moyen d'une géométrie d'image connue afin de configurer de nombreux points d'étalonnage, la génération, à partir de tous ces points, d'un ensemble de facteurs de conversion à appliquer aux différentes zones de l'image, et la transformation de la distance mesurée en pixels en une distance exprimée en unités de longueur à l'aide de ces facteurs de conversion ; et
- la répétition des étapes de calcul (107) et de conversion jusqu'à obtenir un ensemble de distances d'intérêt entre les nœuds de référence.

2. Procédé selon la revendication 1, comprenant une étape préalable consistant à la fixation des câbles (3) à la table de travail (1) au moyen de harnais de fixation (2), de sorte que les câbles (3) soient étirés et tendus.

3. Procédé selon la revendication 1, dans lequel l'étape de traitement (104) de l'image comprend les sous-étapes consistant à :
- la conversion (204) de l'image en niveaux de gris,
- le floutage (205) de l'image, se concentrant uniquement sur les câbles (3),
- la binarisation (206) de l'image, obtenant une image composée de pixels noirs et blancs, et
- l'amincissement (208) des câbles (3) sur l'image, de sorte qu'elles se réduisent à une géométrie avec un ensemble de courbes centrées.

4. Procédé selon la revendication 3, dans lequel un flou gaussien se réalise lors de l'étape de floutage (205).

5. Procédé selon la revendication 3, comprenant une étape supplémentaire après l'étape de binarisation (206), consistant au remplissage (207) des pixels laissés vides à l'intérieur des câbles (3) de l'image.

6. Procédé selon la revendication 1, dans lequel l'acquisition (101) des images se réalise à partir du haut, à un point opposé à la table de travail (1).

7. Procédé selon la revendication 1, dans lequel l'acquisition (101) des images se réalise latéralement par rapport à la table de travail (1) et aux câbles (3).

8. Procédé selon la revendication 1, qui peut comprendre une étape supplémentaire, préalable à l'étape consistant à l'obtention des images (102), consistant à éclairer la table de travail (1) afin d'améliorer la qualité des images.

9. Procédé selon la revendication 1, comprenant une étape supplémentaire consistant à l'identification des formes, comprenant une sous-étape consistant à l'application d'un appariement par forme de référence à l'image acquise des câbles (3) afin d'identifier un élément d'intérêt.

10. Procédé selon la revendication 1, comprenant une étape supplémentaire consistant à l'identification de la couleur du câble (3), comprenant les sous-étapes consistant à :
- la localisation de chacun des pixels de l'image dans un espace de couleurs TSV,
- la détermination de la couleur de chaque pixel à partir de sa position dans le modèle TSV, en tenant compte d'une plage d'acceptation minimale et maximale prédéfinie,
- la détermination de la couleur du câble (3),
- à partir de la couleur de chacun des pixels des câbles (3), la détection des défauts ayant une couleur différente de celle du câble (3).

11. Procédé selon la revendication 3, comprenant une étape supplémentaire consistant à l'identification des protubérances présentes dans le câble (3), comprenant les sous-étapes suivantes consistant à :
- la détermination, dans chaque pixel des courbes centrées sur la forme d'origine du câble (3) créée lors de l'étape d'amincissement, l'orientation du pixel et de ses pixels voisins,
- la détermination de quand une protubérance apparaît, ainsi que sa taille, basée sur la comparaison des orientations des pixels,
- si une protubérance est détectée, la détermination de son orientation et sa position par rapport au nœud le plus proche.

12. Procédé selon la revendication 1, dans laquelle, lorsque les câbles (3) sont raccordés à des connecteurs, il comprend une étape supplémentaire consistant à la détection des connecteurs, comprenant les sous-étapes suivantes consistant à :
- la segmentation de l'image afin de déterminer une zone dans laquelle se trouve le connecteur,
- l'inspection de la zone afin de déterminer les limites du raccord,
- la réalisation d'une analyse histogramme afin de déterminer une zone de fixation du câble (3) au connecteur, et
- le positionnement d'un nœud au niveau de la zone de fixation du câble (3) au connecteur, afin de pouvoir déterminer ensuite la longueur du câble (3).

13. Programme informatique configuré pour exécuter, lorsqu'il fonctionne sur un ordinateur utilisé en association avec une caméra, les étapes du procédé selon l'une quelconque des revendications 1, 2, 4 à 7 et 9 à 11.

14. Unité de stockage configurée pour stocker le programme informatique selon la revendication 13.
